# EUROPEAN PATENT APPLICATION

(11) **EP 4 845 041 A1**
(43) Date of publication of application: **25.11.2026**
(21) Application number: 24923361.0
(22) Date of filing: 09.10.2024
(51) Int. Cl.: H04B 7/0413, H04B 7/06

(54) **INFORMATION CONFIGURATION METHOD**

(30) Priority: 07.02.2024 CN 202410174331
(71) Applicant: ZTE Corporation, Shenzhen, Guangdong 518057 (CN)
(72) Inventor: YANG, Jun, Shenzhen, Guangdong 518057 (CN); CHEN, Yijian, Shenzhen, Guangdong 518057 (CN); SI, Yuan, Shenzhen, Guangdong 518057 (CN); LU, Guangyan, Shenzhen, Guangdong 518057 (CN)
(74) Representative: Savi, Massimiliano
(86) International application number: PCT/CN2024/123704
(87) International publication number: WO 2025/167157

(57) **Abstract**

The embodiments of the present application provide an information configuration method, comprising: receiving a reference signal; on the basis of the reference signal, determining a pre-selected codeword from a codebook; on the basis of the pre-selected codeword, determining feedback configuration information; on the basis of the feedback configuration information, determining channel state information; and sending the channel state information.

## Description

### CROSS-REFERENCE TO RELATED APPLICATION

This application claims the benefit of priority to Chinese Patent Application No. 202410174331.0, filed on February 7, 2024, the entire disclosure of which is incorporated herein by reference in its entirety.

### TECHNICAL FIELD

The embodiments of the present disclosure relate to the field of wireless communication technologies, and in particular, to an information configuration method, a terminal device, a storage medium, and a computer program product.

### BACKGROUND

In existing technologies, the precoding matrix indicated by the precoding matrix indicator information in Multiple Input Multiple Output (MIMO) can only be selected from a fixed codebook. In ultra-massive MIMO arrays, when the same precoding is applied across the entire signal bandwidth, the beam directions of different subcarriers may experience deviation. An increase in transmission bandwidth further exacerbates the impact of dispersion effects. In MIMO arrays, the optional beams for subbands are typically set to a fixed set of four beams, but for ultra-wideband signals, this cannot cover the dispersion compensation for the full bandwidth. Meanwhile, beams emitted at different angles exhibit variations in gain and beamwidth due to differences in effective aperture, and these variations increase with the scale of the MIMO array. In existing communication standards, the feedback configuration of channel state information is typically set by the base station through Radio Resource Control (RRC) signaling, which lacks flexibility and fails to address wideband dispersion issues.

Therefore, there is a need for a more flexible configuration method for channel state information feedback, terminal devices, storage media, and computer program products, to mitigate the impact of dispersion effects in ultra-massive MIMO systems.

### SUMMARY

Embodiments of the present disclosure provide an information configuration method, aiming to achieve flexible configuration of channel state information and reduce the impact of wideband dispersion.

In a first aspect in accordance with an embodiment of the present disclosure, an information configuration method is provided. The method includes: receiving a reference signal; determining, based on the reference signal, a preselected codeword from a codebook; determining, based on the preselected codeword, feedback configuration information; determining, based on the feedback configuration information, channel state information; and sending the channel state information.

In a second aspect in accordance with an embodiment of the present disclosure, a terminal device is further provided. The terminal device includes at least one processor; and at least one memory, configured to store at least one program; the information configuration method according to the first aspect is implemented when the at least one program is executed by the at least one processor.

In a third aspect in accordance with an embodiment of the present disclosure, a computer-readable storage medium is further provided, on which processor-executable programs are stored, and the information configuration method according to the first aspect is implemented when the processor-executable programs are executed by a processor.

In a fourth aspect in accordance with an embodiment of the present disclosure, a computer program product is further provided, including computer programs or computer instructions, where the computer programs or the computer instructions are stored in a computer-readable storage medium, a processor of a computer device reads the computer programs or the computer instructions from the computer-readable storage medium, and the processor executes the computer programs or the computer instructions, causing the computer device to perform the information configuration method according to the first aspect.

Embodiments of the present disclosure provide an information configuration method, which includes: receiving a reference signal; determining, based on the reference signal, a preselected codeword from a codebook; determining, based on the preselected codeword, feedback configuration information; by using codeword-specific feedback configurations, based on the feedback configuration information corresponding to the preselected codewords, flexible configuration of the channel state information can be achieved. Meanwhile, the present disclosure also determines feedback configuration information based on different beam angles, reducing the difference between beam gain and beam width, providing more balanced transmission performance, ensuring beamforming performance while minimizing the impact of wideband dispersion and reducing feedback overhead.

### BRIEF DESCRIPTION OF THE DRAWINGS

Fig. 1 is a schematic diagram of an exemplary MIMO system in existing technologies.
Fig. 2 is a schematic diagram of a communication system suitable for MIMO technology according to an embodiment of the present disclosure.
Fig. 3 is a flowchart of an information configuration method according to an embodiment of the present disclosure.
Fig. 4 is a flowchart of an information configuration method according to an embodiment of the present disclosure.
Fig. 5 is a flowchart of an information configuration method according to an embodiment of the present disclosure.
Fig. 6 is a schematic diagram illustrating the spatial division of MIMO array beams according to an embodiment of the present disclosure.
Fig. 7 is a schematic diagram of shared codewords between codeword groups when the preselected codeword corresponds to a beam departure angle of less than 20°.
Fig. 8 is a schematic diagram of shared codewords between codeword groups when the preselected codeword corresponds to a beam departure angle of less than or equal to 45° and greater than 20°;
Fig. 9 is a schematic diagram of shared codewords between codeword groups when the preselected codeword corresponds to a beam departure angle of greater than 60°;
Fig. 10 is a schematic diagram of a range of codewords in codeword groups when the preselected codeword corresponds to a beam departure angle of less than 20°;
Fig. 11 is a schematic diagram of a range of codewords in codeword groups when the preselected codeword corresponds to a beam departure angle of less than or equal to 45° and greater than 20°;
Fig. 12 is a schematic diagram of a range of codewords in codeword groups when the preselected codeword corresponds to a beam departure angle of greater than 45°;
Fig. 13 is a schematic diagram illustrating a terminal device according to an embodiment of the present disclosure.

### DETAILED DESCRIPTION

In order to make the object, technical schemes and advantages of the present disclosure clearer, the present disclosure is further described in detail below in conjunction with the accompanying drawings and specific embodiments. It should be understood that the specific embodiments described herein are only intended to explain the present disclosure and are not intended to limit the present disclosure.

It should be noted that although functional modules are divided in the schematic diagram of devices and a logical sequence is shown in the flowchart, in some cases, the steps shown or described may be performed in an order different from that illustrated in the flowcharts, or implemented in a manner different from the functional module division in the devices. The terms "first", "second", etc., in the description, claims and drawings of the present disclosure, are used to distinguish similar objects, and are not necessarily used to describe a particular order.

The terms such as "dispose", "install" and "connect" in the description of the embodiments of the present disclosure should be interpreted broadly. Those skilled in the art can reasonably determine the meanings of these terms in the embodiments of the present disclosure based on the content of the technical scheme.

In the embodiments of the present disclosure, terms such as "further", "exemplarily", or "optionally" are used to indicate examples, illustrations, or explanations and should not be construed as being more preferable or advantageous over other embodiments or design schemes. The use of terms such as "further," "for example," or "optionally" is intended to present related concepts in a specific manner.

In the embodiments of the present disclosure, terms such as "further", "exemplarily", or "optionally" are used to indicate examples, illustrations, or explanations and should not be construed as being more preferable or advantageous over other embodiments or design schemes. The use of terms such as "further," "for example," or "optionally" is intended to present related concepts in a specific manner.

The base station side device in the embodiments of the present disclosure may be an evolved NodeB (eNB), a Transmission Reception Point (TRP), a next-generation NodeB (gNB) in a New Radio (NR) system, a base station in other future mobile communication systems, or an access node in a Wireless Fidelity (WiFi) system, among others. The embodiments of the present disclosure do not limit the specific technology or the specific device form adopted by the network device.

The user equipment or user terminal in the embodiments of the present disclosure refers to an entity on the user side for receiving or transmitting signals, such as a mobile phone. The terminal-side device may also be referred to as a terminal, user equipment (UE), mobile station (MS), mobile terminal device (MT), etc. A terminal device may be a vehicle with communication capabilities, a smart vehicle, a mobile phone, a wearable device, a tablet (Pad), a computer with wireless transceiver functions, a virtual reality (VR) terminal device, an augmented reality (AR) terminal device, a wireless terminal device in industrial control, a wireless terminal device in self-driving applications, a wireless terminal device in remote medical surgery, a wireless terminal device in smart grid systems, a wireless terminal device in transportation safety, a wireless terminal device in smart city applications, a wireless terminal device in smart home systems, and the like. The embodiments of the present disclosure do not limit the specific technology or the specific device form adopted by the terminal device.

Multiple Input Multiple Output (MIMO) technology is a key physical layer technology in fourth-generation (4G) and fifth-generation (5G) mobile communications, utilizing multiple antennas at both the transmitter and receiver to significantly enhance channel capacity.

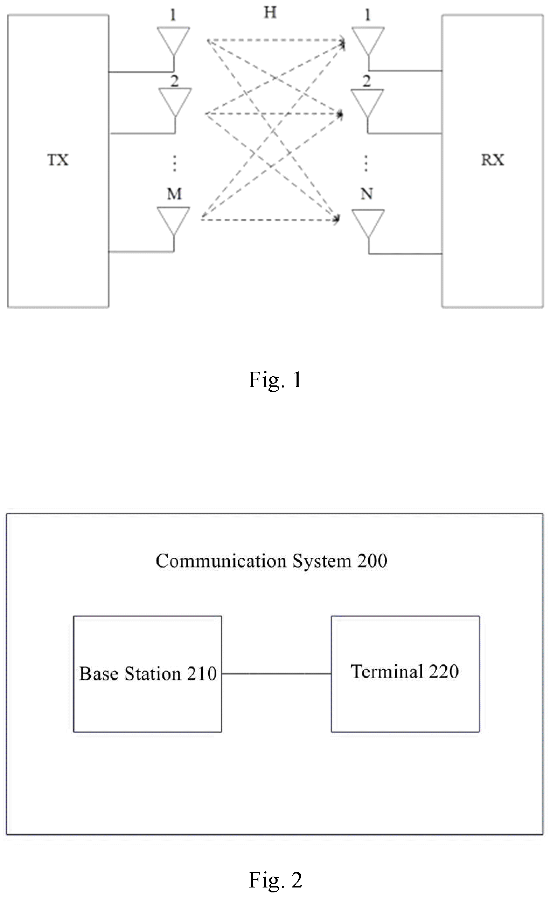

Fig. 1 is a schematic diagram of a typical MIMO system in existing technologies. As shown in Fig. 1, the transmitter TX and the receiver RX are equipped with M transmitting antenna units and N receiving antenna units, respectively, forming the transceiver channel H. Compared to conventional antenna systems, MIMO technology enables higher spatial multiplexing and spectral efficiency, further enhancing cell capacity.

MIMO technology relies on channel information for beamforming, which is used to focus signals in specific directions to enhance the signal reception gain in that direction. To achieve beamforming, both the transmitter and receiver need to understand the Channel State Information (CSI), which refers to the channel characteristics between the transmitter and receivers. Before communication, the receiver can acquire channel information by measuring pilot signals. Pilot signals are typically transmitted as part of reference signals (such as CSI-RS), and the receiver uses them to estimate the large-scale and small-scale fading characteristics of the channel. The receiver can obtain information about the channel state by measuring and processing the pilot signals. Where downlink channel information is obtained by the terminal device through measuring downlink reference signals and fed back to the base station, for example, in the form of Precoding Matrix Indicator (PMI) to report the optimal codeword to the base station, which then configures downlink precoding for information transmission accordingly. Based on the received PMI, the base station configures the downlink precoding matrix to use the optimal precoding matrix for information transmission on the downlink, thereby maximizing the utilization of channel characteristics and enhancing system performance and capacity.

Ultra-massive MIMO represents the further advancement of MIMO technology. By employing larger-scale antenna arrays, it achieves higher spatial multiplexing gains and more precise beamforming, thereby further improving system capacity and spectral efficiency.

However, ultra-massive MIMO arrays can exacerbate the beam dispersion effect. When the same precoding is applied across the entire signal bandwidth, the beam directions for different subcarriers may deviate, and the increase in transmission bandwidth can further amplify the impact of dispersion. Meanwhile, beams emitted at different angles from the MIMO array may have differences in gain and beamwidth due to differences in effective aperture. With the increase in array scale in ultra-massive MIMO, the differences in beam gain and beamwidth under different channel conditions will further expand. It is necessary to flexibly configure feedback parameters based on channel characteristics to balance beam performance and feedback overhead under varying channel conditions.

In wideband channel information feedback techniques, the optional beams for subbands are typically set to a fixed number of four beams. A one-dimensional array is fixed with four adjacent beams in the same direction, while a two-dimensional array is made up of a group of beams consisting of two adjacent beams in the horizontal direction and two in the vertical direction. As the array size or bandwidth increases, four beams are insufficient to cover the dispersion compensation across the bandwidth. In existing technologies, the design of channel information feedback does not fully account for ultra-massive arrays and ultra-wide bandwidth.

Based on this, embodiments of the present disclosure provide an information configuration method, terminal device, medium, and program product. An embodiment of the present disclosure provides an information configuration method. The method includes: based on the measurement results of the reference signal, determining the feedback configuration information; based on the feedback configuration information, determining the channel state information; and sending the feedback so that the base station establishes communication with the terminal device according to the feedback information. Utilizing feedback configuration information to assist in determining channel state information, so that the number of beams or the bandwidth range selectable for subbands can be configured more flexibly. It not only reduces the impact of dispersion effects but also lowers the feedback overhead in the channel information feedback process for certain application scenarios.

The technical scheme of the present disclosure is applicable to various communication systems. Therefore, the following description is not limited to any specific communication system, for example, fifth-generation (5G) systems or sixth-generation (6G) systems, and so on. In particular, it applies to scenarios where obtaining channel information between the transmitter (TX) and the receiver (RX) is required prior to communication. To facilitate understanding of the technical schemes of the present disclosure, the following elaborates on the information configuration method, terminal device, storage medium, and computer program product, by illustrating an application scenario of the technical schemes of the present disclosure.

The subband in the embodiments of the present disclosure may be a serving cell, a bandwidth part (BWP), a resource block (RB) group within a BWP, or a subcarrier group within a BWP. One piece of wideband codeword group configuration information is shared by the subbands.

Fig. 2 is a schematic diagram of a communication system suitable for MIMO technology according to embodiments of the present disclosure. As shown in Fig. 2, the communication system 200 includes a terminal-side device, such as a smart terminal 210, and a base station-side device, such as a transmitting base station 220.

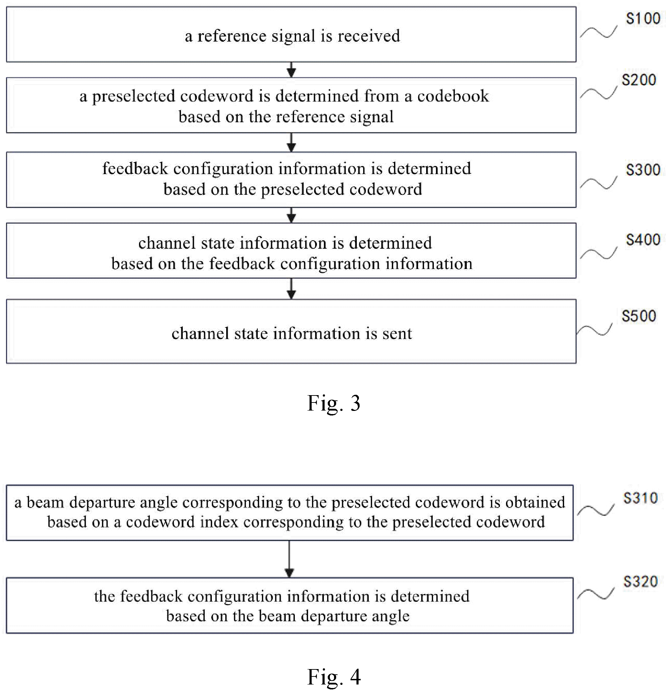

Fig. 3 is a flowchart of an information configuration method according to an embodiment of the present disclosure. As shown in Fig. 3, the information configuration method may be performed by the smart terminal 210. The steps of the channel information configuration method may include, but are not limited to, steps S100, S200, S300, S400, and S500.

At step S100, a reference signal is received.

In an embodiment, the reference signal is a Channel State Information reference signal (CSI-RS).

CSI-RS serves as a reference signal for channel estimation. A terminal device can use CSI-RS to estimate the large-scale and small-scale fading parameters of the channel, thereby facilitating effective signal detection and decoding. CSI-RS is typically distributed within the system bandwidth with specific time slots and frequency-domain resources, and is transmitted periodically according to requirements. CSI-RS can be configured to assist user equipment (UE), such as a terminal device, in feeding back channel state information to the base station, enabling the base station to perform adaptive transmission for the downlink.

In another embodiment, the reference signal is a Synchronization Signal (SS). The SS serves as a reference signal for clock synchronization and system positioning, assisting the receiver in time and frequency synchronization, as well as determining the location of the base station. Synchronization signals are typically distributed within the system bandwidth with specific time slots and frequency domain resources, and are transmitted at fixed intervals. The receiver restores clock counting and system positioning information by detecting and decoding the synchronization signals, thereby achieving synchronization with the base station.

The reference signal may also be one or more of the following: Cell-specific Reference Signal (CRS), Demodulation Reference Signal (DMRS), Positioning Reference Signal (PRS), etc. CRS is used as a common reference signal for all user equipment within the cell. DMRS is used as a reference signal for a certain particular user equipment, used for demodulating the data of that user equipment. PRS is used as a reference signal for supporting user equipment positioning. It is sent at specific time and frequency resources with higher transmission power, enabling the user equipment to accurately measure its location information.

At step S200, a preselected codeword is determined from a codebook based on the reference signal.

In an embodiment, the reference signal at the receiver can be expressed as follows: $y = Hx + n$ where x is the reference signal, H is the channel matrix, n is the noise term, and y is the received vector.

To accomplish channel estimation, the receiver can design a reception processing matrix W to process the vector y, that is, $y ′ = Wy$

In an embodiment, W is obtained by employing one of the methods: Minimum Mean Square Error (MMSE), Linear Minimum Mean Square Error (LMMSE), or maximum likelihood estimation. Based on the processed received vector y', the channel matrix H can be determined, thereby the preselected codeword can be obtained.

In an example, the received reference signal is a known signal sequence. The receiver compares the received reference signal with the known transmitted signal and performs channel estimation through signal processing algorithms. Through channel estimation, the receiver can obtain channel matrix H and then select the preselected codeword which is most related to H from the codebook.

In an embodiment, the preselected codeword may be a codeword which matches the channel H well across the entire communication bandwidth. In this embodiment, the matching may refer to at least one of the following metrics being optimized at the receiver across the entire communication bandwidth when the preselected codeword is used for transmission precoding: received power, signal-to-noise ratio, or data rate. It should be noted that the preselected codeword is a codeword which matches the characteristics of the wideband channel. In some applications, the wideband characteristics may be superior, but they may not necessarily be superior in narrowband. Therefore, during the feedback process, the codeword for the subband can be further determined based on the preselected codeword. The preselected codeword represents the characteristics of the wideband channel, and in some applications, appropriate feedback configuration information can be determined based on the preselected codeword.

A codebook is a set which contains multiple codewords. The codewords can be configured to configure the precoding of a MIMO array to achieve specific beamforming effects, such as forming a directional beam for the transmitted signal.

The codebook can be a predefined precoding matrix set based on system requirements and communication standards, where each precoding matrix corresponds to a codeword used for multi-antenna transmission in wireless communication systems. It provides a variety of precoding matrix options to adapt to different channel conditions and transmission needs.

At step S300, feedback configuration information is determined based on the preselected codeword.

In an embodiment, feedback configuration information can be obtained based on a codeword index corresponding to the preselected codeword.

In an example, for the preselected codeword W₁, the index of codeword W₁ is {i₁, i₂}. Thus, the index {i₁, i₂} can be used to determine the feedback configuration information.

In an example, the codewords in the codebook satisfy the following form: ${W}_{l , m , n} = \frac{1}{\sqrt{{P}_{CSI - RS}}} \left[\begin{matrix}{ν}_{l , m} \\ {φ}_{n} {ν}_{l , m}\end{matrix}\right]$ where, ${φ}_{n} = {e}^{jπn / 2}$ ${u}_{m} = \left\{\begin{matrix}\left[1 {e}^{j \frac{2 πm}{{O}_{2} {N}_{2}}} ⋯ {e}^{j \frac{2 πm \left({N}_{2}-1\right)}{{O}_{2} {N}_{2}}}\right] & {N}_{2} > 1 \\ 1 & {N}_{2} = 1\end{matrix}\right.$ ${ν}_{l , m} = {\left[{u}_{m} {e}^{j \frac{2 πl}{{O}_{1} {N}_{1}}}{u}_{m} ⋯ {e}^{j \frac{2 πl \left({N}_{1}-1\right)}{{O}_{1} {N}_{1}}} {u}_{m}\right]}^{T}$

{l, m, n} is the index of a codeword, with 1 and m representing the codeword indices in the first and second dimensions, respectively, and n representing the polarization phase. The polarization phase refers to an initial phase of a specific polarized signal, such as the initial phases of two orthogonal polarization components in a dual-polarized antenna.

In an embodiment, n may be an integer value between 0 and 3. The codeword index can indicate the position of the codeword in the codebook. That is, once the specific codeword is known, its index can be obtained based on its position in the codebook.

In an embodiment, codewords in the codebook can be divided into one or more codeword groups, and the feedback configuration information is determined based on the codeword group to which the preselected codeword belongs.

In an embodiment, the preset codeword group corresponds to the feedback configuration information.

**Table 1: Illustration of different codeword groups corresponding to feedback configuration information**

| Codeword Group | | Feedback Configuration Information | |
|---|---|---|---|
| | 1 | | A |
| | 2 | | B |
| | .... | | .... |
| | N | | M |

Table 1 is illustration of different codeword groups corresponding to feedback configuration information. As shown in Table 1, the codewords in the codebook are divided into N codeword groups, each of which has corresponding feedback configuration information, where codeword group 1 corresponds to feedback configuration information A, codeword group 2 corresponds to feedback configuration information B, and codeword group N corresponds to feedback configuration information M. That is, once the codeword group to which a codeword belongs is known, the feedback configuration information corresponding to the codeword group can be determined. As can be seen from Table 1, the method proposed in the embodiments of the present disclosure can determine the feedback configuration information based on the codeword group to which the preselected codeword belongs. When the preselected codeword belongs to different codeword groups, the obtained feedback configuration information may differ.

In another embodiment, the codewords in the codebook can be grouped according to codeword index, a group to which the preselected codeword belongs can be determined based on an index of the preselected codeword, and the feedback configuration information is determined based on the group to which the preselected codeword belongs.

In an embodiment, a codebook contains N codewords, with codeword indices numbered 0, 1, ..., N-1. In some application scenarios, codewords with even indices can be grouped together, and those with odd indices can be grouped together. In some application scenarios, codewords with indices less than N/2 can be grouped together, while those with indices not less than N/2 belong to the other group. That is, once the codeword group to which a codeword index belongs is known, the corresponding feedback configuration information for that codeword group can be determined. In some application scenarios, the feedback configuration information may include one or more configuration parameters.

In an embodiment, assume that the codebook includes C₁, C₂, C₃, ..., Cn codeword groups, and the preselected codeword is W₁. Codeword W₁ is one in the codeword group C₁, then the feedback configuration information can be determined based on the codeword group C₁. In an example, one codebook consists of 20 codewords, and the codeword index numbers of these 20 codewords are 0, 1, ..., 19, respectively. Among these, the 10 codewords with indices 0 to 9 are classified into codeword group 1, which has a preset feedback configuration of A, and the 10 codewords with indices 10 to 19 are classified into codeword group 2, which has a preset feedback configuration of B. Based on the reference signal, the terminal device selects a preselected codeword from the codebook, where the index of the preselected codeword is 5. According to the index 5 of the preselected codeword, it can be determined that the preselected codeword belongs to codeword group 1, thereby determining the corresponding feedback configuration information A.

In another embodiment, the codeword group can include one reference codeword. Based on the position information of the reference codeword, the position information of other codewords in the codeword group can be determined. In an example, the position information of a codeword can be index information corresponding to the codeword. By adopting the above method, the overhead required for feedback can be further reduced.

In an embodiment, the feedback configuration information can include subband dividing configuration information, configured to determine a subband dividing method within a specified communication bandwidth.

In an embodiment, the subband dividing configuration information can include at least one of subband quantity configuration information or subband frequency-band configuration information. Based on the subband quantity configuration information, the number of subbands within a communication bandwidth can be determined. Assuming the specified communication bandwidth is 100M, the subband quantity configuration information can be configured to determine how many subbands the 100M bandwidth is divided into, for example, into 4 subbands. It will be appreciated that the bandwidths corresponding to the 4 subbands can be the same, partially the same, or all different. In an example, it can be divided into 4 subbands each occupying 25M bandwidth, or into 2 subbands each occupying 25M bandwidth, 1 subband occupying 10M bandwidth, and another subband occupying 40M bandwidth.

Based on the subband frequency-band configuration information, it can be determined within which range of the communication bandwidth a subband is located. In an example, assuming the communication bandwidth is 100M, and it is evenly divided into 4 subbands according to the subband quantity configuration information, then each subband occupies a bandwidth of 25M. According to the subband frequency-band configuration information, one of the subbands can be configured within the low-frequency range of 25M.

In an embodiment, feedback configuration information can include codeword oversampling configuration information, configured to determine a number of non-orthogonal codewords between two adjacent orthogonal codewords in a codebook.

In an embodiment, the codeword oversampling configuration information includes oversampling coefficient configuration information of codebook. Configuring the oversampling coefficient of the codebook enables the feedback of more refined channel information, thereby achieving better beamforming performance.

In an embodiment, according to the oversampling coefficient configuration information of the codebook, the codeword oversampling coefficients O₁ and O₂ are determined. Codeword oversampling configuration information is configured to determine a number of non-orthogonal codewords between two adjacent orthogonal codewords in a codebook. Each codeword corresponds to one subband/beam, thus different oversampling coefficients correspond to different numbers of codewords in the codebook. For example, in some cases, O₁ indicates that the number of beams between adjacent orthogonal beams in the horizontal direction is (O₁-1), and O₂ indicates that the number of beams between adjacent orthogonal beams in the vertical direction is (O₂-1).

In an embodiment, feedback configuration information can include wideband codeword group configuration information, configured to determine a range of codewords available for feedback within a specified communication bandwidth. After a wideband codeword group of one subband is determined, only codewords from the codeword group can be selected for the subcarriers or subcarrier group within that subband for feedback.

In an embodiment, the wideband codeword group configuration information can include at least one of: configuration information for codeword quantity in a wideband codeword group, or the configuration information for codeword position in a codeword group.

Based on the configuration information for codeword quantity in the wideband codeword group, the number of codeword in the codeword group can be determined.

In an embodiment, the codeword group C₁ can determine how many codewords are included in the codeword group C₁ according to the configuration information for codeword quantity in the wideband codeword group. For example, the codeword group C₁ contains n {W₁, W₂, ......, Wₙ} codewords; or n*m codewords: $\left\{\begin{matrix}{W}_{1,1} & … … & {W}_{1 , m} \\ … … & … … & … … \\ {W}_{n , 1} & … … & {W}_{n , m}\end{matrix}\right\} .$

Based on the configuration information for codeword position in the codeword group, the position in the codebook of each codeword in the codeword group can be determined. In an example, codeword group C₁ can determine the position of each codeword in codeword group C₁ based on the configuration information for codeword position in the codeword group, such as the initial codeword being W_{1,1}, and the codeword at row 1, column 2 being W_{1,2}.

In an embodiment, feedback configuration information can include channel state configuration information, which is configured to determine a quantization parameter for channel state indication information, and the quantization parameter is configured to determine the representation form of the channel state information. In ultra-massive MIMO systems, accurate channel state information is a high-dimensional matrix, and feeding back this matrix requires a significant amount of communication time-frequency resources. Therefore, it is generally necessary to perform a certain degree of compression on the high-dimensional channel state information during feedback. Quantization is a way of compression. For instance, the channel state can be represented by a codeword that matches the channel, i.e., using the Precoding Matrix Indicator (PMI) as feedback information. Alternatively, the channel state can be represented by the Rank Indicator (RI) of channel, Layer Indicator (LI), and Channel Quality Indicator (CQI). These quantization approaches can transform high-dimensional channel state information into lower-dimensional parameters, thereby reducing feedback overhead.

In an embodiment, the channel state configuration information can include at least one of range configuration information for channel state indication information or interval configuration information for channel state indication information. The range configuration information for channel state indication information is configured to determine the value range of the channel state indication information. The interval configuration information of channel state indication information is configured to determine a number of intervals within the value range specified by the channel state indication information and a code corresponding to each interval. It can be understood that the more intervals are divided, the higher the quantization accuracy.

In another embodiment, Fig. 4 is a flowchart of an information configuration method according to an embodiment of the present disclosure. As shown in Fig. 4, step S300 further includes step S310 and step S320.

At step S310, a beam departure angle corresponding to the preselected codeword is obtained based on a codeword index corresponding to the preselected codeword.

In an embodiment, each codeword indicates a beam within the beamspace region; that is, by determining the preselected codeword and its corresponding codeword index, the beam departure angle corresponding to the preselected codeword can be obtained.

At step S320, the feedback configuration information is determined based on the beam departure angle.

In an embodiment, feedback configuration information corresponding to a preset beam departure angle is preselected.

**Table 2: Illustration of different beam departure angle ranges corresponding to feedback configuration information**

| Beam Departure Angle Range Corresponding to Codeword | | Feedback Configuration Information | |
|---|---|---|---|
| | ≤20° | | A |
| | >20° and ≤45° | | B |
| | >45° | | C |

Table 2 is illustration of different beam departure angle ranges corresponding to the feedback configuration information. As shown in Table 2, different beam departure angle ranges correspond to different feedback configuration information. The departure angle here can be defined as the angle between the main lobe direction of the beam and the normal direction of the MIMO array.

In an example, the angle range of [-20°, 20°] corresponds to feedback configuration information A; the angle ranges of [-45°, -20°] and [20°, 45°] correspond to feedback configuration information B; and the angle ranges of [-90°, -45°] and [45°, 90°] correspond to feedback configuration information C.

At step S400, channel state information is determined based on the feedback configuration information.

In an embodiment, the channel state information can include channel state indication information, which can be configured to represent the channel state information. In an example, the channel state indication information may include at least one of Rank Indicator (RI), Precoding Matrix Indicator (PMI), Channel Quality Indicator (CQI), or Layer Indicator (LI). In some cases, the value ranges of RI and LI can be determined based on feedback configuration information. In some cases, it can be determined whether the codebook corresponding to PMI requires oversampling based on feedback configuration information. In some cases, the value range and interval division of CQI can be determined based on feedback configuration information, thereby determining the quantization level. Therefore, the representation form of channel state information during feedback can be determined according to the feedback configuration information, and subsequently, the channel state indication information for each subband within the communication bandwidth can be ascertained.

At step S500, channel state information is sent.

The channel state indication information of each subband in the communication bandwidth can be sent as feedback information. The feedback information can be configured to determine the transmit precoding for the MIMO array, adapting to channel characteristics and enhancing transmission performance.

In an embodiment, the channel state information and the feedback configuration information can be sent simultaneously. The representation of channel state information is determined by feedback configuration parameters. Therefore, in some cases, it is necessary to decode and recover the compressed and dimensionality-reduced channel state information based on the feedback configuration information.

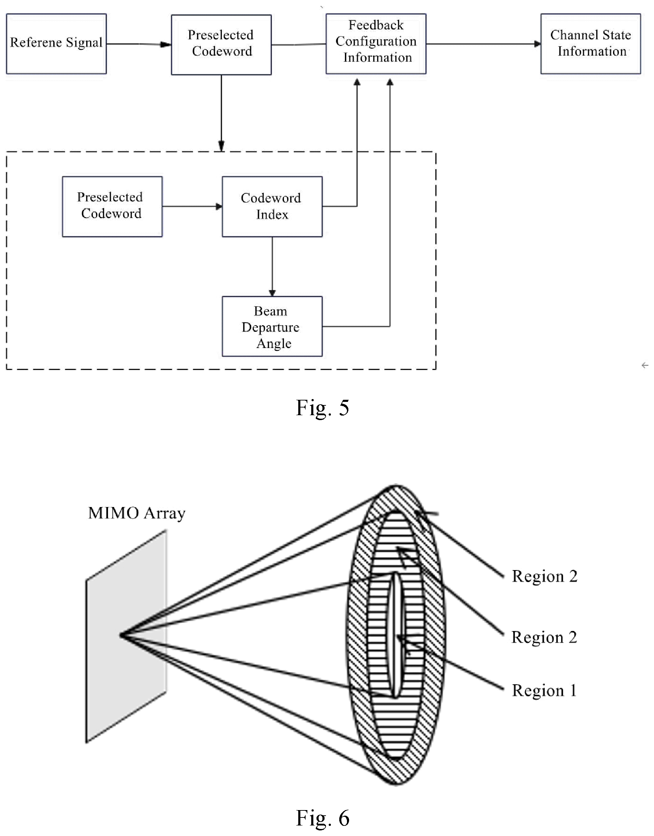

Fig. 5 is a flowchart of an information configuration method according to an embodiment of the present disclosure. As shown in Fig. 5, in this embodiment, a preselected codeword is obtained based on a reference channel, feedback configuration information is determined according to the preselected codeword, and then channel state information is further determined in combination with the feedback configuration information. In other embodiments, after the preselected codeword is determined, the information configuration method may involve determining the codeword index corresponding to the preselected codeword, then determining feedback configuration information based on the codeword index, and subsequently obtaining channel state information in combination with the feedback configuration information. In other embodiments, after the precoding codeword is determined, the information configuration method may involve determining the codeword index corresponding to the precoding codeword, then determining the beam departure angle, subsequently determining the feedback configuration information based on the beam departure angle, and finally obtaining the channel state information by combining the feedback configuration information. Through the above approach, the base station can, during channel configuration, combine the information fed back by the terminal device to configure a more optimized communication method tailored to the current communication environment/state. This avoids the approach in existing technologies, where channel state information is determined solely based on fixed feedback configurations, thereby potentially reducing the impact of dispersion effects. Meanwhile, in some applications, it can further reduce communication overhead.

In other embodiments, since the feedback configuration parameters need to be determined based on the preselected codewords, and different preselected codewords lead to different configuration parameters, the channel state information and feedback configuration information can also be simultaneously transmitted to the base station side to accurately decode and recover channel state information. The transmitted channel state information may be an indication of the channel state. The base station side can obtain the channel state based on the channel state indication information and the feedback configuration information, thereby determining an appropriate downlink signal transmission configuration.

To further elaborate on the method provided by the embodiments of the present disclosure, a detailed explanation is given through the following example.

### Example 1: information configuration method

### Step 1: receiving a reference signal

The reference signal may be Channel State Information Reference Signal (CSI-RS), or may be a synchronization signal such as SS, etc. The reference signal arriving at the receiver can be expressed as: $y = Hx + n$ where x is the reference signal, H is the channel matrix, n is the noise term, and y is the received vector.

### Step 2: selecting a codeword from the preset codebook based on the reference signal measurement results

To accomplish channel estimation, the receiver can design a reception processing matrix W to process the vector y, that is, $y ′ = Wy$ where, W can be obtained using common methods such as MMSE, LMMSE, and maximum likelihood estimation. Based on the processed received vector y', the channel matrix H can be determined, thereby codeword can be selected from the preset codebook for feedback.

### Step 3: determining the feedback configuration parameter based on the index information of the selected codeword

In existing technologies, channel measurement and feedback based on pilot signals typically employ fixed parameter configurations. For example, fixed oversampling coefficients for codewords O₁ and O₂, fixed codeword indication information length, fixed number of BWPs, etc. Such fixed configurations constrain the performance improvement of MIMO systems and are not conducive to mitigating the dispersion effects of massive MIMO arrays in wideband communications.

The method proposed in this example allows the terminal device to adjust the feedback configuration parameters based on channel measurement results, or based on channel measurement results and the selected codeword, and subsequently determine the codeword indication information for feedback according to these adjusted configuration parameters.

In some applications, the terminal device can determine the oversampling coefficients O₁ and O₂ of the codeword used for feedback based on the index of the preselected codeword. The aforementioned configuration adjustment can provide more refined channel information feedback, thereby achieving improved beamforming performance. The aforementioned codeword oversampling coefficients are configured to determine the number of non-orthogonal codewords between adjacent orthogonal codewords in the codebook. Each codeword corresponds to a beam, thus different oversampling coefficients correspond to different numbers of codewords in the codebook. In some cases, O₁ indicates that the number of beams between adjacent orthogonal beams in the horizontal direction is (O₁-1), and O₂ indicates that the number of beams between adjacent orthogonal beams in the vertical direction is (O₂-1).

In some applications, the terminal device can determine the number of BWPs or subcarrier groups within a BWP based on the index of the selected codeword. The aforementioned configuration adjustment can reduce feedback overhead without affecting beamforming. In some cases, the communication bandwidth is 100 MHz. If the preselected codeword is W₁, the communication bandwidth can be divided into 4 BWPs; if the selected codeword is W₂, the communication bandwidth needs to be divided into 8 BWPs. That is, the division of BWPs varies with the preselected codeword, and is determined by indices 1 and 2.

In some applications, the terminal device can determine the codeword range used for wideband feedback based on the index of the selected codeword. Due to the wideband dispersion effect in MIMO arrays, different subbands require the selection of distinct codewords to compensate for the dispersion impact. In some existing technologies, the subcarrier codewords fed back by the terminal device can only be selected from a fixed set of four adjacent codewords, meaning a codeword group can only contain four adjacent codewords. However, a more reasonable design should determine the appropriate beam range based on channel state information. Adjacent can refer to MIMO beams corresponding to codewords being adjacent to each other in space. The number of codewords in the codeword group determined by the method proposed in this example can be greater than 4 or less than 4, and is determined by the indices of the preselected codewords.

Step 4: feeding back channel state information determined based on feedback configuration information

The fed channel state information may include indication information of feedback configuration parameters and channel state indication information, and may also include feedback configuration information.

The indication information of feedback configuration parameters determined by the terminal device can be configured to assist in subcarrier-level codeword selection within the BWP or subcarrier group in the wideband codebook, can also be configured to assist in determining the granularity of BWP or subcarrier group division in wideband feedback, and can further be configured to determine the oversampling coefficient for codewords in the codebook applicable to subbands. At least one indication information of feedback configuration parameters determined by the terminal device needs to feed back its indication information. For example, if the terminal device determines that the number of BWP divisions is 6, in some cases, it is necessary to feed back the configuration indication information together with channel state indication information, such as Precoding Matrix Indicator (PMI), to the base station.

### Example 2: Codeword Group Dividing Method

Codewords in the preset codebook can be divided into multiple codeword groups. Based on the codeword group to which the preselected codeword belongs, the feedback configuration information corresponding to the codeword group can be determined, where codewords belonging to the same codeword group can be assigned the same feedback configuration parameters. That is, based on the codeword group to which the index of the selected codeword belongs, the feedback configuration information required for that codeword can be determined.

In some applications, the codebook can be divided into codeword groups according to the beam departure angle corresponding to the codeword, uniformly dividing the beam spatial region by horizontal angle. In an example, the space where the MIMO array is located is divided into K regions (K > 1). The main lobes of beams generated when codewords in the preset codebook are applied to the MIMO array respectively fall within one of the K regions. Accordingly, the codewords in the preset codebook can be divided into K groups, and codewords belonging to the same group can adopt the same feedback configuration. For example, a codebook consists of 20 codewords. The beams corresponding to these 20 codewords are located within ±60° in the horizontal direction, with codeword index numbers being 0, 1, ..., 19. The horizontal ±60° angular range is divided into the following 5 regions: [-60°, -36°], [-36°, -12°], [-12°, 12°], [12°, 36°], [36°, 60°]. The 20 codewords can be divided into 5 groups based on the angles of their corresponding beams. Beams from different angular ranges from 5 beam groups, corresponding to 5 codeword groups.

In some applications, the beam spatial regions are divided non-uniformly according to the horizontal angle. Since the wideband dispersion effect of beams near the normal direction of the MIMO array is less pronounced, the codewords corresponding to beams within a broader region can be grouped together. In contrast, the beam dispersion effect is more significant in regions farther from the normal direction of the MIMO array, requiring codewords corresponding to beams within smaller areas to be grouped separately. In an example, the space where the MIMO array is located is divided into five regions, with the beams corresponding to the codewords located within ±60° in the horizontal direction. The angular range is divided into the following five regions: [-60°, -45°], [-45°, -25°], [-25°, 25°], [25°, 45°], [45°, 60°].

In some applications, Fig. 6 is a schematic diagram illustrating the spatial region division of MIMO array beams provided by an embodiment of the present disclosure. As shown in Fig. 6, the space where the MIMO array is located is divided into multiple conical regions centered on the array normal, and the codewords corresponding to beams located in the same conical region belong to the same codeword group. A beam corresponding to a codeword being located in a specific region can be understood as the main lobe direction of the beam pointing toward that region.

In some applications, codewords in a codebook can be grouped based on their index values. For example, a codebook contains N codewords, with codeword indices numbered 0, 1, ..., N-1. In an example, codewords with even-numbered indices can be grouped together, and those with odd-numbered indices can be grouped together. In another case, codewords with indices less than N/2 can be grouped together, while those with indices not less than N/2 belong to the other group. The number of codeword groups can be determined based on practical conditions and may exceed 2.

### Example 3: Configuration of BWP and Subcarrier Groups

As the communication bandwidth increases, the number of subcarriers also rises under a fixed subcarrier bandwidth. If the full bandwidth is still divided into a fixed number of subbands, the subband bandwidth will increase accordingly. Using the same set of wideband precoding configurations would lead to significant performance issues due to dispersion effects. This example dynamically determines an appropriate subband division based on preselected codewords to reduce the impact of dispersion. The subbands share a common wideband codeword group configuration, meaning that the multiple codewords used for feedback in each subband can only be selected from the wideband codeword group. For instance, a BWP can be configured with a wideband codeword group configuration, and the RB groups within the BWP can only select codewords from the codeword group defined by the wideband codeword group configuration.

In some applications, the departure angle of the selected beam is determined based on the index of the selected codeword, and then the number of BWPs is determined according to the departure angle. In an example, when the beam corresponding to the index of the selected codeword is located in the normal direction of the MIMO array, the number of BWPs is configured as 4; when the beam corresponding to the index of the selected codeword deviates from the normal of the MIMO array by 30°, the number of BWPs is configured as 6; and when the beam corresponding to the index of the selected codeword deviates from the normal of the MIMO array by 60°, the number of BWPs is configured as 8. After determining the number of BWPs, the terminal device determines the feedback BWP configuration parameters and can use these parameters to determine subband precoding and feedback information.

In some applications, subcarriers within a BWP are further divided into subcarrier groups, where subcarriers belonging to the same group can select codewords from a fixed set of codewords. The number of subcarrier groups can also be determined based on the index of the selected codeword. It will be appreciated that when the preset codebook has been grouped in advance, the configuration parameters of the BWP and subcarrier groups can be directly determined based on the group to which the codeword belongs. In this example, the feedback configuration for subband dividing is determined through preselected codewords, allowing dynamic adjustment of subband sizes. This ensures that channels with different angles can be configured with appropriate subband bandwidths, thereby avoiding performance degradation caused by varying dispersion effects at different angles.

### Example 4: Wideband Codeword Group Configuration Method

In some cases, dynamically configuring the number of BWPs or subcarrier groups may affect resource management in MIMO systems, such as the number of Control Resource Sets (CORESETs). To maintain existing BWP configurations while mitigating the effects of dispersion on the system, the wideband codeword group configuration for BWPs or subcarrier groups can be determined based on the selected precoding. The wideband codeword group is configured to restrict the range of codewords that can be selected for a subband (e.g., BWP, RB group within a BWP, subcarrier group within a BWP) during terminal device feedback, and configuring the wideband codeword group information can reduce feedback overhead. Depending on different precoding codewords, wideband codeword groups containing varying numbers of codewords can be configured. For example, beams with large-angle emission (i.e., beams far from the normal direction of the MIMO array) exhibit more pronounced dispersion effects. Under such channel conditions, it is necessary to configure a larger selectable codeword range for subbands.

The codewords in this example codebook satisfy the following form: ${W}_{l , m , n} = \frac{1}{\sqrt{{P}_{CSI - RS}}} \left[\begin{matrix}{ν}_{l , m} \\ {φ}_{n} {ν}_{l , m}\end{matrix}\right]$ where, ${u}_{m} = \left\{\begin{matrix}\left[1 {e}^{j \frac{2 πm}{{O}_{2} {N}_{2}}} ⋯ {e}^{j \frac{2 πm \left({N}_{2}-1\right)}{{O}_{2} {N}_{2}}}\right] & {N}_{2} > 1 \\ 1 & {N}_{2} = 1\end{matrix}\right.$ ${ν}_{l , m} = {\left[{u}_{m} {e}^{j \frac{2 πl}{{O}_{1} {N}_{1}}}{u}_{m} ⋯ {e}^{j \frac{2 πl \left({N}_{1}-1\right)}{{O}_{1} {N}_{1}}} {u}_{m}\right]}^{T}$

In the codeword indices {l, m, n}, l and m represent the codeword indices in the first and second dimensions, respectively, and n indicates the polarization phase. The polarization phase refers to an initial phase of a specific polarized signal, such as the initial phases of two orthogonal polarization components in a dual-polarized antenna. In an example, n can be an integer value between 0 and 3. The codeword index can indicate the position of the codeword in the codebook. It will be appreciated that once the specific codeword is known, its index can be obtained based on its position in the codebook.

In some cases, the index {l, m, n} of the codeword is determined according to the codeword indication information {*i*₁₁*,i*₁₂*,i*₂}*.* The codeword group includes a reference codeword {*i*₁₁*,i*₁₂*,i*₂}, and the codeword indication information {*i*₁₁*,i*₁₂} of the reference codeword serves as the configuration information for codeword position in the codeword group, configured to determine the positions of each codeword in the group. i2 indicates the order of the codeword within the codeword group. Based on the position information of the reference codeword {*i*₁₁*,i*₁₂}, the index range of codewords in the codeword group can be determined as *i*₁₁ ∈ {0,1···*N*₁*O*₁ / *s*₁ *-*1} and *i*₁₂ ∈ {0,1,*···N*₂*O*₂ / *s*₂-1}, where N₁, N₂, O₁, O₂, s1, and s2 are preset parameters. *N*₁O₁ /*s*₁ -1 and *N*₂*O*₂ / *s*₂ -1 respectively indicate the quantity configuration of codewords in the first dimension and the second dimension within the codeword group. That is, {*i*₁₁*,i*₁₂} indicates the starting or ending position of a continuous region of codeword groups in the codebook.

It can be understood that the wideband codeword group configuration information is configured to limit the range of selectable codewords in a subband, meaning the wideband codeword group configuration is configured to determine a codeword group, and the subband can only select codewords from this group when providing feedback. Where the codewords in the codeword group share the location information of a reference codeword {*i*₁₁*,i*₁₂}, which is configured to indicate the location of the codeword group and the range corresponding to the codewords. Therefore, when the position information of the reference codeword in the reference codeword group {*i*₁₁*,i*₁₂} is known, the range of the codeword group can be determined by combining the quantity configuration information of the codewords, thereby determining the position information of the other codewords in the codeword group.

In some applications, the number of codewords in a codeword group is determined based on the index of the preselected codeword. In an example, Table 3 illustrates the variation of the codeword range in the wideband codeword group of a one-dimensional array with the angular range of beam emission corresponding to the preselected codeword. As shown in Table 3, when the beam corresponding to the index of the preselected codeword is near the normal of the MIMO array, the number of codewords in the wideband codeword group can be configured as 2. When the beam corresponding to the index of the preselected codeword deviates from the normal of the MIMO array by more than 20°, the number of codewords in the wideband beam group can be configured as 4. When the beam corresponding to the index of the preselected codeword deviates from the normal of the MIMO array by more than 45°, the number of codewords in the wideband codeword group can be configured as 8.

**Table 3: Illustration of the variation in the codeword range in the codeword group of a one-dimensional array as the beam angle range corresponding to the preselected codeword changes**

| The angle range of the beam indicated by i₁₁ deviating from the MIMO array normal (i₁₂=0) | | The range of 1 index that can be selected in *W_{l,m,n}* |
|---|---|---|
| | ≤20° | {*i*₁₁*,i*₁₁ + 1} |
| | >20° and ≤45 ° | {*i*₁₁,*i*₁₁ *+* 1,*i*₁₁ *+* 2*,i*₁₁ + 3} |
| | >45° | {*i*₁₁,*i*₁₁ + 1,*i*₁₁ + 2,*i*₁₁ + 3,*i*₁₁ + 4,*i*₁₁ + 5,*i*₁₁ + 6,*i*₁₁ + 7} |

In an example, Table 4 illustrates the variation of the codeword range in the codeword group of a two-dimensional array with changes in the preselected codeword angle range. As shown in Table 4, when the beam corresponding to the index of the preselected codeword is near the normal of the MIMO array, the number of codewords in the wideband codeword group can be configured as 4. When the beam corresponding to the index of the preselected codeword deviates from the normal of the MIMO array by more than 20°, the number of codewords in the wideband codeword group can be configured as 16. When the beam corresponding to the index of the preselected codeword deviates from the normal of the MIMO array by more than 45°, the number of codewords of the wideband codeword group can be configured as 64.

**Table 4: Illustration of codeword range variation in the codeword group of a two-dimensional array as the angular range of preselected codewords changes**

| The angular range of beam indicated by i₁₁ and i₁₂ deviating from the normal of the MIMO array | | The selectable range of indices l and m in *W*_{*l*,*m*,*n*} |
|---|---|---|
| | ≤20° | *l* ∈ {*i*₁₁,*i*₁₁ + 1}, *m* ∈ {*i*₁₂,*i*₁₂ + 1} |
| | >20° and ≤45° | *l* ∈ {*i*₁₁,*i*₁₁ + 1,*i*₁₁ + 2,*i*₁₁ + 3}, *m* ∈ {*i*₁₂,*i*₁₂ + 1,*i*₁₂ + 2,*i*₁₂ + 3}, |
| | >45° | *l* ∈ {*i*₁₁,*i*₁₁ + 1,*i*₁₁ + 2,*i*₁₁ + 3,*i*₁₁ + 4,*i*₁₁ + 5,*i*₁₁ + 6,*i*₁₁ + 7}, *m* ∈ {*i*₁₂,*i*₁₂ + 1,*i*₁₂ + 2,*i*₁₂ + 3,*i*₁₂ + 4,*i*₁₂ + 5,*i*₁₂ + 6,*i*₁₂ + 7}, |

In certain applications, the number of codewords is determined based on factors such as the array scale. In an example, there are 8 codewords in the horizontal direction and 4 codewords in the vertical direction, resulting in a codeword group containing 32 codewords, which correspond to 32 beams.

In this example, the departure angle range of the beam corresponding to the selected codeword can be determined based on the index of the codeword, and further, the number of codeword groups for feedback can be determined according to the angle range. That is, the feedback configuration information is angle-dependent, with different angular ranges corresponding to distinct feedback configuration information. If the preset codebook has grouped the codewords in advance, the codeword group configuration for feedback can be directly determined based on the group to which the preselected codeword belongs.

In some cases, the wideband codeword group requires more than three indicator parameters to determine, such as {i₁₁, i₁₂, i₂₁, i₂₂}, etc. This can be specifically determined based on the arrangement or storage method of codewords in the codebook. After the codeword for feedback in the subband is determined, the PMI information of the codeword for feedback can be determined based on the wideband codeword configuration information and then fed back.

### Example 5: Configuration of the number of shared codewords in adjacent codeword groups

In subband codeword selection, existing technologies predefines a wideband codeword group configuration with a fixed offset applied to two adjacent subbands. For instance, for a one-dimensional array, the wideband codeword group of a subband generally contains four codewords, and the codeword groups corresponding to two adjacent subbands share two identical codewords. For example, the wideband codeword group corresponding to the first subband includes four codewords with indices {0,1,2,3}, while the wideband codeword group corresponding to the second subband includes codewords with indices {2,3,4,5}, where codewords 2 and 3 are shared by both wideband codeword groups. For example, in a two-dimensional array, each codeword group also contains four codewords, but adjacent codeword groups do not contain identical codewords. In an example, the first wideband codeword group contains codeword indices {00,01,10,11}, while the second wideband codeword group contains codeword indices {02,03,12,13}. Regardless of how the channel state changes, this configuration remains fixed. The above design is not conducive to countering the effects of dispersion, necessitating the introduction of a more flexible configuration approach.

In some applications, this example determines the number of shared codewords in adjacent codeword groups within the feedback based on the index of the preselected codeword. That is, different preselected codewords correspond to different beam groups used for selecting subcarrier codewords. In some cases, the index of the preselected codeword may indicate the angle of the beam, and based on the angular range, shared codewords in adjacent beam groups in the feedback can be configured. In an example, the terminal device determines the indication information of the preselected codeword as i₁₁ and i₁₂. Based on i₁₁ and i₁₂, the angle between the beam departure angle corresponding to the codeword and the normal of the MIMO array can be determined.

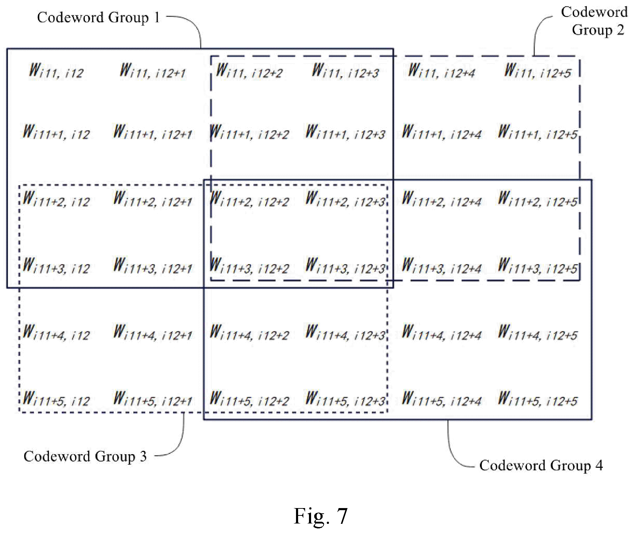

Fig. 7 is a schematic diagram of shared codewords between codeword groups when the preselected codeword corresponds to a beam departure angle of less than 20°. As shown in Fig. 7, in a codebook, four 4×4 codeword groups, i.e., codeword group 1, codeword group 2, codeword group 3, and codeword group 4 are divided respectively. Based on the index corresponding to the preselected codeword, the beam departure angle corresponding to the preselected codeword is obtained. When the beam departure angle is less than or equal to 20°, adjacent codeword groups in the horizontal and vertical directions share 8 codewords, while adjacent codeword groups in the diagonal direction share 4 codewords.

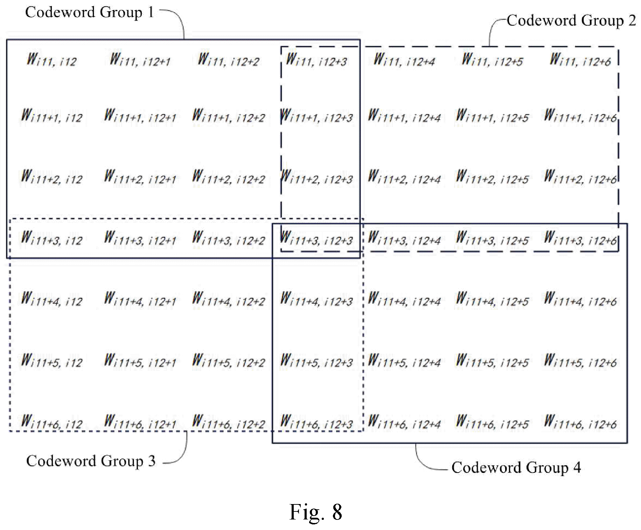

Fig. 8 is a schematic diagram of shared codewords between wideband codeword groups when the preselected codeword corresponds to a beam departure angle of less than or equal to 45° and greater than 20°; As shown in Fig. 8, in a codebook, four 4×4 codeword groups, i.e., codeword group 1, codeword group 2, codeword group 3, and codeword group 4 are divided respectively. Based on the index corresponding to the preselected codeword, the beam departure angle corresponding to the preselected codeword is obtained. When the beam departure angle is less than or equal to 45° and greater than 20°, adjacent codeword groups in the horizontal and vertical directions share 8 codewords, while adjacent codeword groups in the diagonal direction share 1 codeword.

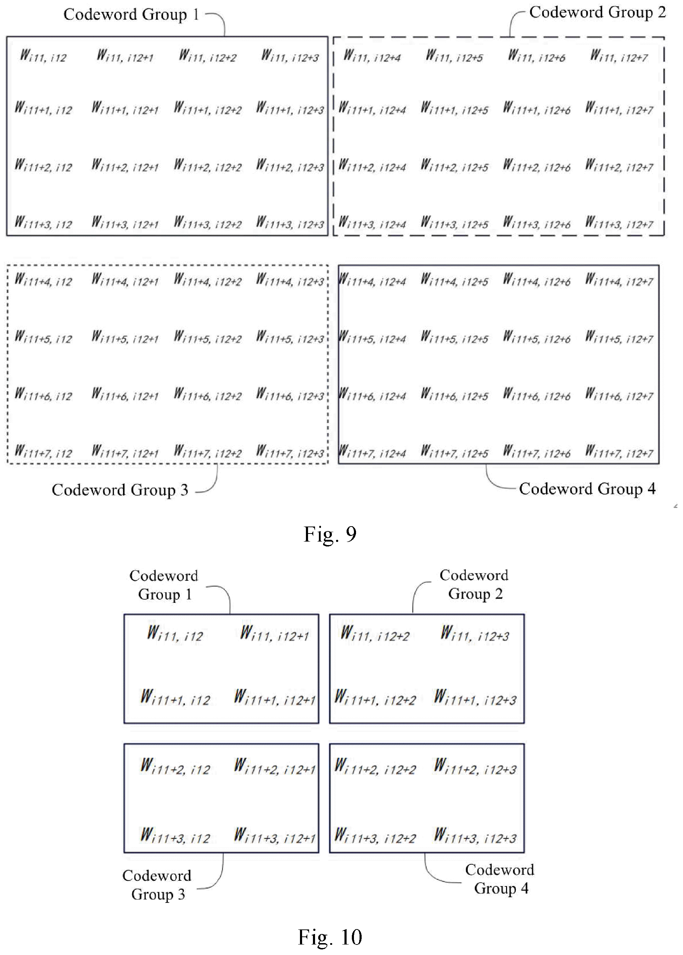

Fig. 9 is a schematic diagram of shared codewords between wideband codeword groups when the preselected codeword corresponds to a beam departure angle of greater than 60°. As shown in Fig. 9, in one codebook, four 4×4 codeword groups, i.e., codeword group 1, codeword group 2, codeword group 3, and codeword group 4 are delineated separately. Based on the index corresponding to the preselected codeword, the beam departure angle corresponding to the preselected codeword is obtained. When the beam departure angle is greater than 60°, there are no shared codewords between adjacent codeword groups.

In some applications, the codeword index determined by the wideband codeword group configuration may include at least three parameters, namely {i₁₁, i₁₂, i₁₃, ..., i₂₁, i₂₂, i₂₃, ...}. This can be specifically determined based on the arrangement and storage method of codewords in the codebook. For example, when the codewords in the codebook are arranged in the form of a high-dimensional matrix, more than two parameters are required for indication.

In some applications, the number of shared codewords between adjacent codeword groups within different angular ranges can be designed according to practical scenarios. Codewords in the preset codebook can be pre-grouped based on their indices, and the feedback configuration information for preselected codeword groups used for wideband precoding can be determined according to the group to which the codeword belongs.

### Example 6: Configuration of codeword oversampling coefficient in the codebook

In an example, a preselected codeword may also be determined based on measurement results of a reference signal, and the oversampling coefficient for the codeword in the codebook used for feedback may be determined according to the index of the codeword. In some related techniques, the oversampling coefficient is fixedly configured and cannot be changed during the channel information feedback process, which prevents the selection of the optimal codeword under certain channel conditions. For example, the beam performance of a MIMO array varies across different angles, reflected in differences in beamwidth and received gain. If the same oversampling coefficient configuration is applied to beams at different angles, it will result in overly dense beam distribution in some areas, increasing feedback overhead, while in other areas, the beam distribution becomes too sparse, creating coverage gaps that affect communication quality.

The configuration method proposed in this example can determine the oversampling coefficient for feedback based on the index of the preselected codeword. In some applications, the index of the preselected codeword can be configured to determine the departure angle of the beam corresponding to that codeword. Based on the beam's departure angle, an appropriate codeword oversampling coefficient can be configured. The table below shows an example of the beam angle range corresponding to codeword indices and the selection of oversampling coefficients. In the table, the configurations of oversampling coefficients O₁ and O₂ can be determined based on the codeword index, with O₁ and O₂ configured to have the same value. In other applications, different values can also be configured for O₁ and O₂ based on the number of antennas in the horizontal and vertical directions of the MIMO array. For example, when the number of antennas in the horizontal direction is greater than that in the vertical direction, O₁ can be configured with a larger value, while O₂ can be configured with a smaller value.

**Table 5: Schematic diagram of determining codebook oversampling coefficients based on beam angle range of pre-selected codewords**

| Angle range of beam deviation from the normal of the MIMO array corresponding to pre-selected codewords | | O₁, O₂ | |
|---|---|---|---|
| | ≤20° | | 4 |
| | >20° and ≤45° | | 2 |
| | >45° | | 1 |

Table 5 shows determining codebook oversampling coefficients based on beam angle range of pre-selected codewords. As shown in Table 5, the beam angle range corresponding to the preselected codewords can be configured to determine the oversampling coefficient configuration for feedback codewords, with different beam angle ranges potentially employing different oversampling coefficients.

Fig. 10 is a schematic diagram of a range of codewords in codeword groups when the preselected codeword corresponds to a beam departure angle of less than 20°. As shown in Fig. 10, in one codebook, four 2x2 codeword groups, i.e., codeword group 1, codeword group 2, codeword group 3, and codeword group 4 are respectively divided. Based on the index corresponding to the preselected codeword, the beam departure angle corresponding to the preselected codeword is obtained. When the beam departure angle is less than or equal to 20°, it corresponds to the codeword range of the codeword group in Table 5. The number of codewords in both the horizontal and vertical directions of the beam's codeword group is configured as 2, resulting in a total of 4 codewords in the beam's codeword group. By combining the codeword configuration position information {*i*₁₁,*i*₁₂}, which indicates the positions of each codeword in the codeword group, the position information {*i*₁₁,*i*₁₂,*i*₂} of other codewords in the codeword group can be determined. Taking codeword group 1 as an example, as shown in Fig. 10, the position information of the reference codeword in codeword group 1 is Wi₁₁,i₁₂. Based on the selectable ranges of l and m indices in Table 5, the position information of the codewords contained in codeword group 1 can be derived as Wi₁₁,i₁₂, Wi₁₁,i₁₂₊₁, Wi₁₁₊₁,i₁₂, and Wi₁₁₊₁,i₁₂₊₁.

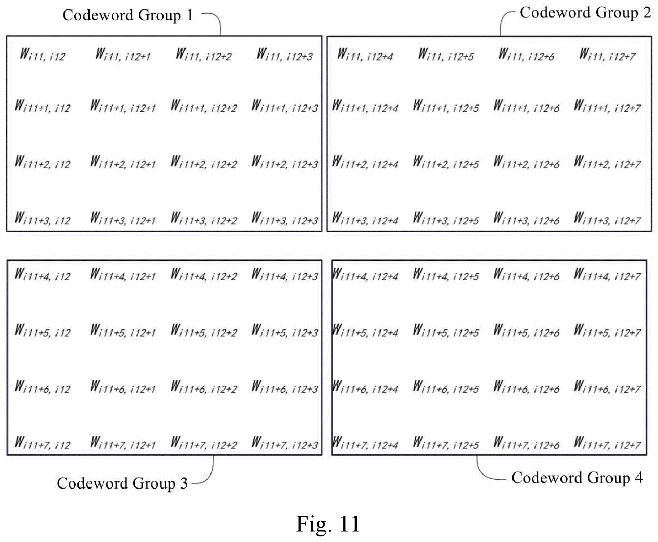

Fig. 11 is a schematic diagram of a range of codewords in codeword groups when the preselected codeword corresponds to a beam departure angle of less than or equal to 45° and greater than 20°. As shown in Fig. 11, in one codebook, four 4x4 codeword groups, i.e., codeword group 1, codeword group 2, codeword group 3, and codeword group 4 are respectively defined. Based on the index corresponding to the preselected codeword, the beam departure angle corresponding to the preselected codeword is obtained. When the beam departure angle is less than or equal to 45° and greater than 20°, the number of codewords in both the horizontal and vertical directions of the codeword group to which the beam belongs is configured as 4, resulting in a total of 16 codewords in the codeword group to which the beam belongs.

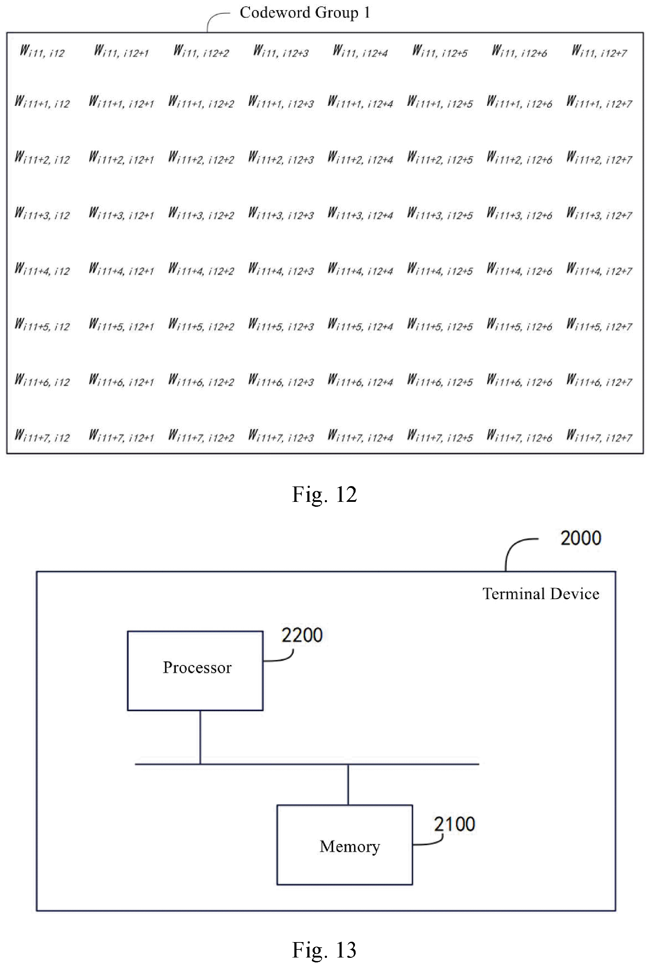

Fig. 12 is a schematic diagram of a range of codewords in codeword groups when the preselected codeword corresponds to a beam departure angle of greater than 45°. As shown in Fig. 12, in a codebook, based on the index corresponding to the preselected codeword, the number of codewords in the horizontal and vertical directions of the beam's codeword group is configured as 8. In this case, the number of codewords in the beam's codeword group is 64.

When different codeword oversampling coefficients are configured, the number of codewords in the wideband codeword group used for feedback also varies. In some cases, the oversampling coefficients O₁ and O₂ configured for the wideband codeword group of a subband are both set to 1, in which case the codeword group contains 4 codewords. In other cases, the oversampling coefficients O₁ and O₂ can be configured as 2, resulting in the codeword group containing 16 codewords.

### Example 7:Configuration of Channel Quality Indicator (CQI)

Channel quality indicator information may include CQI, Signal-to-Noise Ratio (SNR), Signal-to-Interference-plus-Noise Ratio (SINR), Reference Signal Received Power (RSRP), etc.

Channel Quality Indicator (CQI) information is a crucial metric for channel information feedback. However, in existing technologies, the quantization feedback of channel quality does not account for the differences between different beams, meaning that the feedback of channel quality indicator information does not consider the influence of preselected codewords. For instance, channel quality can be configured to determine the modulation order of transmitted signals. However, some related techniques for channel quality measurement do not fully consider the effects caused by channel variations.

The information configuration method proposed in this example can determine the quantized configuration of channel quality, such as the quantization range, based on the index of preselected codewords.

In some applications, when the preselected codeword corresponds to a small-angle departure beam, a larger quantization range, such as between 10 and 100, can be adopted for channel quality. In other applications, when the preselected codeword corresponds to a large-angle outgoing beam, the channel quality can instead be quantized over a smaller range, for example, between 1 and 30.

In some applications, when the preselected codeword corresponds to a small-angle outgoing beam, the channel quality can be divided into a larger number of intervals, for example, divided into 10 intervals between 10 and 100. Conversely, when the preselected codeword corresponds to a large-angle outgoing beam, the channel quality can be divided into 5 intervals.

In some applications, when the preselected codeword corresponds to a small-angle outgoing beam, the selectable range for RI is {1, 2, 4, 8, 16}. Conversely, when the preselected codeword corresponds to a large-angle outgoing beam, the selectable range for RI is {1, 2, 4}.

In some applications, when the preselected codeword corresponds to a small-angle outgoing beam, the selectable range for LI is {1, 2, 3, 4}; conversely, when the preselected codeword corresponds to a large-angle outgoing beam, the selectable range for LI is {1, 2}.

In some applications, based on the feedback configuration information, the type of channel state indication information to be used for feedback is determined. In an example, based on channel state configuration information, it is determined whether the feedback channel state indication information is RI, PMI, LI, or CQI.

Fig. 13 is a schematic diagram illustrating a terminal device according to an embodiment of the present disclosure. As shown in Fig. 13, the terminal device includes: a memory 2100, a processor 2200, and computer programs stored in the memory 2100 and can run on the processor 2200. When the processor 2200 executes the computer programs, the information configuration method in any previous embodiment is implemented.

In addition, an embodiment of the present disclosure further discloses a computer-readable storage medium storing computer-executable instructions, which are configured to execute the information configuration method in any previous embodiment.

An embodiment of the present disclosure further provides a computer program product, including computer programs or computer instructions, where the computer programs or the computer instructions are stored in a computer-readable storage medium, a processor of a computer device reads the computer programs or the computer instructions from the computer-readable storage medium, and the processor executes the computer programs or the computer instructions, causing the computer device to perform the information configuration method according to any embodiment of the present disclosure.

The system architecture and application scenarios described in the embodiments of the present disclosure are intended to more clearly illustrate the technical schemes of the embodiments of the present disclosure and do not constitute limitations on the technical schemes provided in the embodiments of the present disclosure. Those skilled in the art will appreciate that, with the evolution of system architectures and the emergence of new application scenarios, the technical schemes provided in the embodiments of the present disclosure are equally applicable to similar technical problems.

Some embodiments of the present disclosure have been described above with reference to the accompanying drawings, which are not intended to limit the scope of claims of the present disclosure. Any changes, equivalent substitutions, and improvements made by those skilled in the art without going beyond the scope and essence of this application should all fall within the rights of this application.

## Claims

1. An information configuration method, comprising:
receiving a reference signal;
determining, based on the reference signal, a preselected codeword from a codebook;
determining, based on the preselected codeword, feedback configuration information;
determining, based on the feedback configuration information, channel state information; and
sending the channel state information.

2. The method according to claim 1, wherein:
the channel state information comprises at least channel state indication information.

3. The method according to claim 1, wherein determining, based on the preselected codeword, feedback configuration information comprises:
obtaining, based on a codeword index corresponding to the preselected codeword, feedback configuration information.

4. The method according to claim 3, wherein obtaining, based on a codeword index corresponding to the preselected codeword, the feedback configuration information comprises:
obtaining, based on a codeword index corresponding to the preselected codeword, a beam departure angle corresponding to the preselected codeword; and
determining, based on the beam departure angle, the feedback configuration information.

5. The method according to claim 1, wherein codewords in the codebook can be divided into at least one codeword group, and the feedback configuration information is determined based on the codeword group to which the preselected codeword belongs.

6. The method according to claim 5, wherein the codewords in the codebook can be grouped according to codeword indices, a group to which the preselected codeword belongs can be determined based on an index of the preselected codeword, and the feedback configuration information is determined based on the group to which the preselected codeword belongs.

7. The method according to claim 1, wherein sending the channel state information comprises:
sending the channel state information and the feedback configuration information.

8. The method according to any one of claims 1 to 7, wherein the feedback configuration information comprises at least one of the following:
subband dividing configuration information, configured to determine a subband dividing method within a specified communication bandwidth;
codeword oversampling configuration information, configured to determine a number of non-orthogonal codewords between two adjacent orthogonal codewords in the codebook;
wideband codeword group configuration information, configured to determine a range of codewords available for feedback within a specified communication bandwidth; or
channel state configuration information, configured to determine a quantization parameter for channel state indication information.

9. The method according to claim 8, wherein the subband dividing configuration information comprises one of the following:
subband quantity configuration information; or
subband frequency-band configuration information.

10. The method according to claim 8, wherein the codeword oversampling configuration information comprises oversampling coefficient configuration information the codebook.

11. The method according to claim 8, wherein the wideband codeword group configuration information comprises:
configuration information for codeword quantity in a wideband codeword group, which is configured to determine a number of codewords in the codeword group; or
configuration information for codeword position in a codeword group, which is configured to determine positions in the codebook of each codeword in the codeword group.

12. The method according to claim 11, wherein:
the codeword group comprises at least one reference codeword, and position information of the reference codeword can be configured to determine position information of other codewords in the codeword group; and
the position information of a codeword is index information corresponding to the codeword.

13. The method according to claim 8, wherein the channel state configuration information comprises:
range configuration information of channel state indication information, which is configured to determine a value range of the channel state indication information; and
interval configuration information of channel state indication information, which is configured to determine a number of intervals within the value range specified by the channel state indication information and a code corresponding to each interval.

14. The method according to any one of claims 1 to 7, wherein the channel state indication information comprises at least one of the following:
Rank Indicator (RI);
Precoding Matrix Indicator (PMI);
Channel Quality Indicator (CQI); or
Layer Indicator (LI).

15. The method according to claim 9, wherein the subband is any one of the following:
one Bandwidth Part (BWP);
at least one Resource Block (RB) of one Bandwidth Part (BWP);
a subcarrier group consisting of multiple subcarriers within one bandwidth part (BWP); or
one wideband codeword group configuration information shared by the subbands.

16. A terminal device, comprising:
at least one processor; and
at least one memory, configured to store at least one program;
wherein the information configuration method according to any one of claims 1 to 15 is implemented when the at least one program is executed by the at least one processor.

17. A computer-readable storage medium, storing processor-executable programs, wherein the information configuration method according to any one of claims 1 to 15 is implemented when the processor-executable programs are executed by a processor.

18. A computer program product, comprising computer programs or computer instructions, wherein the computer programs or the computer instructions are stored in a computer-readable storage medium, a processor of a computer device reads the computer programs or the computer instructions from the computer-readable storage medium, and the processor executes the computer programs or the computer instructions, causing the computer device to perform the information configuration method according to any one of claims 1 to 15.
